# EUROPÄISCHE PATENTSCHRIFT

(11) **EP 0 589 274 B1**
(45) Veröffentlichungstag und Bekanntmachung des Hinweises auf die Patenterteilung: **30.07.1997**
(21) Anmeldenummer: 93114272.3
(22) Anmeldetag: 06.09.1993
(51) Int. Cl.: G02B 6/44

(54) **Lichtwellenleiterader mit einer Füllmasse und Verfahren zu deren Herstellung**
Buffered optical fiber with filling material and method of making it
Conducteur en fibre optique avec matériau de remplissage et sa méthode de sa fabrication

(30) Priorität: 21.09.1992 DE 4231570
(43) Veröffentlichungstag der Anmeldung: 30.03.1994
(73) Patentinhaber: SIEMENS AKTIENGESELLSCHAFT, 80333 München (DE)
(72) Erfinder: Polle, Hubert, Dr., D-96450 Coburg (DE)

(56) Entgegenhaltungen:
- EP-A- 0 206 234
- DE-A- 3 027 743
- DE-A- 3 213 783
- US-A- 4 382 821

## Beschreibung

Die Erfindung betrifft eine Lichtwellenleiterader mit mindestens einem innerhalb einer Schutzhülle untergebrachten Lichtwellenleiter, der in eine pastenförmige Füllmasse eingebettet ist.

Aus der EP 29 198 B1 ist es bekannt, daß Lichtwellenleiter, die innerhalb einer Schutzhülle angeordnet sind, mit einer speziellen Füllmasse (Aderfüllmasse) gefüllt werden können, die aus einem Gemisch aus einem Öl, einem Thixotropierungsmittel und einem organischen Verdickungsmittel besteht. Die Anforderungen an derartige Aderfüllmassen sind hoch, weil einerseits der Lichtwellenleiter innerhalb der Füllmasse eine ausreichende Beweglichkeit aufweisen soll, so daß die Füllmasse also möglichst niederviskos gewählt werden sollte. Andererseits muß auch für derartige Aderfüllmassen die Tropfsicherheit gewährleistet sein, d.h. die Füllmasse darf sich nicht - auch bei senkrechter Verlegung des Kabels - aus dem Inneren der den Lichtwellenleiter umgebenden Schutzhülle herausbewegen (heraustropfen). Die ausreichende Tropfbeständigkeit einerseits und die schonende Einbettung der Lichtwellenleiter andererseits in die Füllmasse müssen über einen weiten Temperaturbereich garantiert werden, beispielsweise von - 40° C bis + 80° C.

Um diesen Forderungen gerecht zu werden, werden die Füllmassen aus sehr hochwertigen Substanzen hergestellt, was zur Folge hat, daß derartige Füllmassen relativ teuer sind.

Neben diesen Aderfüllmassen, bei denen die Füllmasse also in unmittelbarem Kontakt zum Lichtwellenleiter steht, gibt es auch sogenannte Seelenfüllmassen, welche die Zwischenräume zwischen elektrischen oder optischen Adern und dem Kabelaußenmantel füllen, also in entsprechende Zwickel räume zwischen diesen Adern eingebracht werden An derartige Seelen-füllmassen werden weit geringere Anforderungen gestellt, als an Aderfüllmassen, weil sie (Selbst bei optischen Kabeln) nicht in einen unmittelbaren Kontakt mit den Lichtwellenleitern stehen, sondern nur in Kontakt mit etwaigen Schutzhüllen der Lichtwellenleiter treten können. Im Zusammenhang mit derartigen Seelenfüllmassen ist aus der DE 31 50 909 C2 bekannt, in die Füllmasse Hohlkörperchen einzufügen, deren Wandungen beispielsweise aus zähelastischen Thermoplasten, Thermoelasten oder Elastomeren bestehen können. Die verwendeten Hohlkörperchen weisen im Mittels einen Durchmesser von etwa 40 µm und eine Wanddicke von 0,6 µm auf.

Aus der US-A-4 382 821 sind Seelenfüllmassen für ein aus elektrischen oder optischen Adern aufgebautes Kabel bekannt, die Zusätze aus Glas- oder Keramikkugelchen enthalten.

Der Erfindung liegt die Aufgabe zugrunde, eine Füllmasse für Lichtwellenleiteradern anzugeben, welche preiswerter hergestellt werden kann, als die bekannten Aderfüllmassen und welche dennoch in der Lage ist, den sehr hohen Anforderungen an die Füllmasse von Lichtwellenleitern zu genügen. Gemäß der Erfindung, welche sich auf eine Lichtwellenleiterader der eingangs genannten Art bezieht, wird diese Aufgabe dadurch gelöst, daß zur Bildung einer Aderfüllmasse in die Füllmasse Vollkügelchen oder elastische Hohlkügelchen eingelagert sind, die aus einem anderen Material als die Füllmasse bestehen und daß der Außendurchmesser der Kügelchen zur Erreichung einer für Bewegungsvorgänge ausreichenden Verschiebbarkeit des Lichtwellenleiters bei Vollkügelchen unter 10µm und bei elastischen Hohlkügelchen bis zu 200µm gewählt ist.

Die Verwendung der Kügelchen in der Aderfüllmasse hat zunächst den Vorteil, daß deren Viskosität erhöht wird. Der Grund hierfür liegt im wesentlichen darin, daß die eigentliche pastöse Füllmasse, d.h. die Ausgangs- oder Grundmasse (ohne die Kügelchen), durch die eingebetteten Kügelchen mechanisch weitgehend am Fließen gehindert wird, was praktisch einer höheren Viskosität entspricht. Gleichzeitig ist aber hinsichtlich der Beweglichkeit des Lichtwellenleiters im Inneren der Schutzhülle weiterhin im wesentlichen die Viskosität der eigentlichen Aderfüllmasse zu Grunde zu legen, weil der relativ steife Lichtwellenleiter bei einer etwaigen Bewegung der Kügelchen jederzeit verdrängen kann, ohne daß durch diesen Verdrängungsprozeß unzulässig große Kräfte auf den Lichtwellenleiter ausgeübt werden. Unterstützt wird dies auch durch die elastische Ausbildung der Kügelchen. Bei den Bewegungsvorgängen des Lichtwellenleiters kann es sich insbesondere um Verseil- und/oder Verlegevorgänge handeln sowie z.B. um durch Temperaturschwankungen bedingte Längenänderungen. Eine Vergrößerte Viskosität ist insbesondere für das Bestehen des Auslauftests (Tropftests) von besonderer Bedeutung.

Durch die Einfügung von Hohlkügelchen wird - da deren spezifisches Gewicht im allgemeinen kleiner ist als das der Aderfüllmasse - auch das spezifische Gewicht der erfindungsgemäßen Füllmasse gegenüber einer rein pastösen Füllmasse stark herabgesetzt. Beim Auslauftest (Tropftest) wird eine bestimmte Länge einer Hohlader senkrecht aufgehängt und das Verhalten der Füllmasse wird bis in den obersten Temperaturbereich untersucht. Wenn das spezifischen Gewicht der Füllmasse innerhalb der aufgehängten Ader geringer ist, ist natürlich auch das Gewicht der praktisch als Säule innerhalb der Ader stehenden Füllmasse geringer und damit auch die Kraft welche zu einem Tropfen führt. Es ist somit im Rahmen der Erfindung möglich, Ausgangs- oder Grundmassen zu verwenden, die für sich allein den Tropftest infolge zu geringer Viskosität nicht bestehen würden, die aber in Mischung mit Hohlkügelchen, die faktisch die Viskosität heraufgesetzen und zugleich das spezifische Gewicht der "Füllmassensäule" heruntersetzen, die gewünschten Eigenschaften erreichen. Besonders bei ausreichend dichter Packung der Kügelchen ergeben sich zwischen diesen relativ enge Spalten die zu einer Kapillarwirkung führen und dadurch einem Austropfen entgegenwirken. Als Füllmassen können somit ziemlich liquide oder semiliquide Substanzen im Inneren der Schutzhülle eingesetzt werden, die sonst den Austropftest (d.h. wenn nur solche Füllmassen eingefügt sind) nicht bestehen würden. Derartige sehr weiche, fast flüssige Füllmassen haben aber den besonderen Vorteil, daß sie die Beweglichkeit des Lichtwellenleiters z.B. bei Verseil- oder Verlegungsvorgängen erleichtern, weil ein fester Körper innerhalb einer praktisch flüssigen Masse seine Lage besonders leicht verschieben kann. Der etwaige, von Kügelchen diesem Verschiebevorgang der Lichtwellenleiter entgegengesetzte Widerstand ist im allgemeinen wesentlich geringer als bei einer Erhöhung der Viskosität der Füllmasse (zwecks Einhaltung des Tropftests) ohne ein Hinzufügen von Kügelchen. Insgesamt wird also durch die Erfindung trotz einer möglichen Verringerung des Preises für die Füllmasse gleichzeitig noch eine erhebliche Verbesserung der Eigenschaften der Füllmasse erreicht, nämlich eine erhöhte Tropffestigkeit bei gleichzeitig zumindest erhalten bleibender oder sogar verbesserter Verschiebbarkeit des Lichtwellenleiters innerhalb der Füllmasse. Hinsichtlich dieser Verschiebbarkeit ist darauf zu achten, daß die Anzahl der Lichtwellenleiter und/oder deren Durchmesser so gewählt werden, daß der Lichtwellenleiters eine z.B. für die Verseil- und Verlegevorgänge noch ausreichende Verschiebbarkeit oder Beweglichkeit innerhalb der Aderfüllmasse beibehält. Dabei gilt die Regel, daß die Verschiebbarkeit des Lichtwellenleiters bei zunehmenden Durchmesser der Kügelchen abnimmt, und daß ebenso die Beweglichkeit der Lichtwellenleiter bei zunehmender Anzahl der Kügelchen innerhalb der Füllmasse ab einem gewissen Grenzwert ebenfalls abnimmt. Große und allzu starre Kügelchen sollten zweckmäßig vermieden werden, damit der Lichtwellenleiter nicht lokal ausgebogen wird.

Gemäß einer zweckmäßigen Weiterbildung an der Erfindung werden Kügelchen verwendet, deren Außendurchmesser bei Vollkügelchen unter 10 µm liegt. Besonders vorteilhaft ist es, wenn die Kügelchen sogar so gewählt werden, daß ihr Außendurchmesser unter einem µm liegt. Gegenüber den beschichteten Lichtwellenleitern, deren Außendurchmesser in der Größenordnung etwa 250 µm liegen, sind also diese Kügelchen stets so verschwindend klein, daß sie einer etwaigen Bewegung des Lichtwellenleiters keine den Lichtwellenleiter etwa schädigenden Widerstand entgegensetzen können und vor allem nicht lokal eine Ausbiegung des Lichtwellenleiters verursachen können (Vermeidung von Dämpfungserhöhungen durch Mikrobending).

In diesem Zusammenhang ist es auch zweckmäßig, die Oberflächen der Kügelchen nicht etwa rauh sondern möglichst glatt zu wählen, und sicher zu stellen, daß diese möglichst leicht an einander entlanggleiten können, wenn es zu einer Verschiebung des Lichtwellenleiters innerhalb der Füllmasse kommt. Rauhe oder zerklüftete Oberflächen der Kügelchen sind also tunlichst zu vermeiden, weil diese den Bewegungsvorgang hemmen könnten.

Die Erfindung betrifft weiterhin ein Verfahren zur Herstellung einer Lichtwellenleiterader, welches dadurch gekennzeichnet ist, daß die Schutzhülle durch Extrusion aufgebracht wird und das die Aderfüllmasse durch den Extruderkopf des Ecxtruders hindurch in die Schutzhülle eingeführt wird.

Sonstige Weiterbildungen der Erfindung sind in Unteransprüchen wiedergegeben.

Die Erfindung und ihre Weiterbildungen werden anhand von Zeichnungen näher erläutert, in denen Ausführungsbeispiele dargestellt sind. Es zeigen:
- Fig. 1: Im Querschnitt eine Lichtwellenleiterader gemäß der Erfindung,
- Fig. 2: Den Aufbau eines optischen Kabels mit Lichtwellenleiteradern gemäß der Erfindung und
- Fig. 3: Ich schematischer Darstellung eine Fertigungseinrichtung für die Herstellung einer erfindungsgemäßen Lichtwellenleiterader.

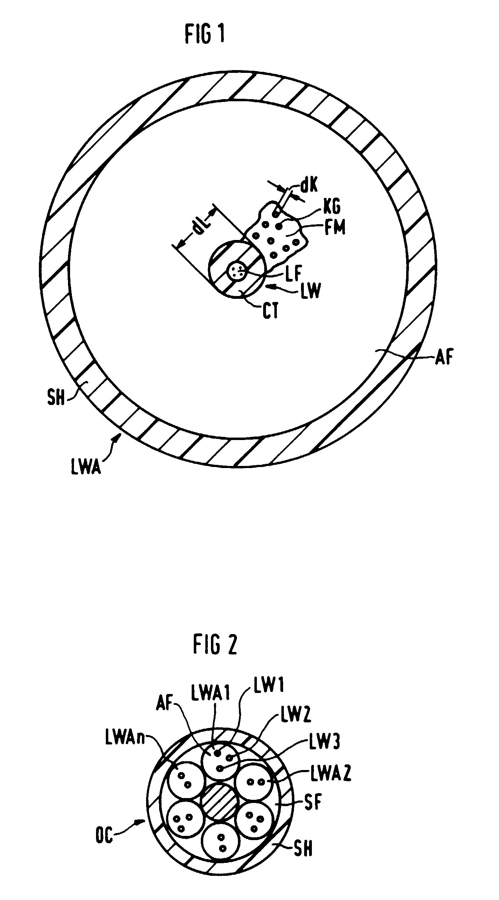

In Figur 1 ist eine Lichtwellenleiterader LWA im Querschnitt dargestellt, die eine äußere ein- oder mehrschichtig aufgebaute Schutzhülle SH aus Kunststoffmaterial aufweist. Im Inneren dieser Schutzhülle ist mindestens ein Lichtwellenleiter LW vorgesehen, der aus der eigentlichen Lichtleitfaser LF und einer darauf angebrachten Schutzschicht (Coating) CT besteht. Der Lichtwellenleiter LW soll beweglich innerhalb der Schutzhülle SH angeordnet sein, wozu der Zwischenraum zwischen der Innenwand der Schutzhülle SH und dem oder den Lichtwellenleitern mit einer Aderfüllmasse AF gefüllt ist. Die Aderfüllmasse AF enthält einen Anteil an pastöser Masse und dieser Anteil kann vorteilhaft eine Zusammensetzung aufweisen, wie er näher in der EP 29 198 B1 beschrieben ist, d.h. sie besteht im wesentlichen aus einem ölhaltigen Anteil, einem Thixotropierungsmittel und einem organischen Verdickungsmittel. Um eine möglichst gute Beweglichkeit der Lichtwellenleiter LW innerhalb der Füllmasse FM zu erreichen, sollte diese Füllmasse möglichst niederviskos gewählt sein. Andererseits ist aber wegen der notwendigen Tropfbeständigkeit (Tropftest) eine gewisse Mindest-Viskosität und Fließgrenze einzuhalten, um ein Auslaufen der Füllmasse zu verhindern. Da zudem diese Eigenschaften über einen relativ großen Temperaturbereich garantiert werden müssen, ist der Preis derartiger Füllmassen relativ hoch.

Hier läßt sich eine Abhilfe dadurch schaffen, daß in die Füllmasse FM Kügelchen KG eingemischt werden, die zur Vereinfachung der Darstellung nur in einem kleinen Teilbereich des Innenraumes der Lichtwellenleiter LWA dargestellt sind. Die in die Füllmasse FM eingelagerten Kügelchen KG bestehen aus einem anderen Material als die Füllmasse und ihr Durchmesser und/oder ihre Anzahl werden so gewählt, daß der Lichtwellenleiter LW eine für die Verseil- und Verlegevorgänge ausreichende Verschiebbarkeit innerhalb der Füllmasse aufweist. Durch die Hinzufügung der Kügelchen ergibt sich eine umfangreiche Palette von Gestaltungsmöglichkeiten, für die Aderfüllmasse AF die nachfolgend näher erläutert werden.

### Durchmesser der Kügelchen:

Der Durchmesser der Kügelchen ist so zu wählen, daß sie dem Lichtwellenleiter LW keinen nennenswerten Widerstand entgegensetzen, d.h., daß es zu keiner lokalen Druckbelastung und keiner lokalen Ausbiegung des Lichtwellenleiters und damit zu keiner Dämpfungserhöhung kommt. Dies bedeutet, daß die Kügelchen zweckmäßig wesentlichen kleiner gewählt werden als der Lichtwellenleiter, wobei der Außendurchmesser dk der Kügelchen bei Ausbildung als relativ harte Vollkügelchen unter 10 µm, vorzugsweise unter 1 µm gewählt wird. Da ein einen größeren Durchmesser dl aufweisender Lichtwellenleiter eher in der Lage ist z.B. bei einem Biegevorgang die Füllmasse samt den Kügelchen zu verdrängen, ist es zweckmäßig, für das Verhältnis dl:dk mindestens 25:1, vorzugsweise mindestens 250:1 zu wählen. Dadurch ist sichergestellt, daß der Lichtwellenleiter infolge seiner Steifigkeit stets in der Lage ist, die wesentlich kleineren Kügelchen ohne allzugroße Widerstandserhöhung zu verdrängen. Elastische Hohlkügelchen können in ihrem Durchmesser vergleichbar dem LWL-Durchmesser gewählt werden, d.h. bis etwa 200 µm.

### Viskosität:

Hinsichtlich der für den Tropftest eine besondere Rolle spielenden Viskosität ergeben die Kügelchen - da zumindest ihre Wandungen aus festem Material bestehen - eine Viskositätserhöhung. Für die Einhaltung des Tropftestes ist derzeit eine Viskosität der Aderfüllmasse von größenordnungsmäßig 10 Pas bei Raumtemperatur erforderlich. Geht man von einer Füllmasse aus, die einen flüssigen Anteil (z.B. ein Öl), ein Thixotropierungsmittel, z.B. Aerosil sowie ein organisches Verdickungsmittel enthält, so kann der Anteil des teuren Thixotropierungsmittels herabgesetzt werden (was zu einer Erniedrigung der Viskosität führen würde), da durch das Anreichern der Füllmasse mit Kügelchen die Viskosität wieder auf den gewünschten Wert ansteigt. Es ist auch möglich, ein billigers Öl als Anteil der Füllmasse zu verwenden, d.h. ein solches, welches weniger zähflüssig ist, weil auch dieser die Viskosität verringernde Einfluß durch die Zugabe der Kügelchen KG kompensiert werden kann. Die Zusammensetzung der Füllmasse kann beispielsweise so erfolgen, daß die pastöse Füllmasse FM nur eine Viskosität von 1 Pas aufweist, wobei durch Zufügen der Kügelchen die Viskosität der nunmehr erhaltenen neuen Aderfüllmasse AF auf den geforderten Wert von größenordnungsmäßig 10 Pas ansteigt. Das heißt, die Viskosität der Füllmasse FM kann um mindestens den Faktor 0,1 niedriger gewählt werden als die geforderte Viskosität der Aderfüllmasse AF.

### Kostenvorteil:

Die Preise für aus Öl, einem Thixotropierungsmittel und einem organischen Verdickungsmittel bestehende Füllmassen liegen zwischen 8 und 30 DM/kg je nach den jeweiligen Anforderungen. Dagegen kostet ein Liter Hohlkügelchen-Volumen unter 2 DM, so daß eine Zumischung zu einer erheblichen Verbilligung führt.

### Volumenanteil der Kügelchen:

Infolge des geringeren Preises wäre es zweckmäßig, möglichst viele Kügelchen KG in die Füllmasse FM einzumischen. Dem steht jedoch entgegen, daß ein zu hoher Anteil an Kügelchen - je nach der Art und Viskosität der verwendeten Füllmasse - der Verlagerung des Lichtwellenleiters bei einer Beansprungung unter Umständen einen entsprechend größeren Widerstand entgegengesetzt. Dabei ist bei Vollkügelchen zu berücksichtigen, daß dieser Widerstand umso größer wird, je größer der Durchmesser dk der Kügelchen gewählt wird. Für einen Druchmesser dk der aus Vollmaterial bestehenden Kügelchen zwischen 1 und 10 µm sind etwa folgende Bereiche für die Volumenprozente an der Aderfüllmasse AF zweckmäßig:
Volumenanteil von Vollkügelchen zwischen 5 bis 50 Vol % Bei elastischen Hohlkügelchen (Durchmesser bis etwa 100 µm) gilt:
Volumenanteil elastischer Hohlkügelchen zwischen 5 und 95 Vol %

### Gleitfähigkeit des Ölanteils:

Je gleitfähiger der Ölanteil der pastösen Füllmasse ist, desto mehr Kügelchen können zugemischt werden. Es ist deshalb zweckmäßig, als Ölanteil der pastösen Füllmasse FM besonders gleitfähige Öle zu nehmen und weniger klebrige Substanzen, weil letztere eher zusammen mit den eingebetteten Kügelchen zu einer die Bewegung des Lichtwellenleiters LW hemmenden Aderfüllmasse AF führen würden.

### Aufbau der Kügelchen:

### a.) starre Vollkügelchen

Bei Verwendung starrer Vollkügelchen ist darauf zu achten, daß diese auf jeden Fall wesentlich kleiner sind, als der Durchmesser dl des Lichtwellenleiters, d.h. bevorzugt um ein µm oder darunter. Beispielsweise können "MF - Abstandshalter 1µ" der Firma Ubitec, Uchte verwendet werden. Diese Kügelchen bestehen aus Melamin-Formaldehyd-Harz. Derartige Materialien haben den Vorteil, daß sie eine geringe thermische Ausdehnung aufweisen, da feste Kunststoffe sich etwa um einen Faktor 10 weniger thermisch ausdehnen als ölige Füllmassen. Während Füllmassen, die bei der Fertigung erwärmt werden (z.B. durch das Extrudieren von Schutzhüllen oder dergleichen) am Ende des Fertigungsprozesses bei der Abkühlung relativ stark schrumpfen, zeigen Aderfüllmassen mit Kügelchen diese nachteiligen Eigenschaften entsprechend dem Anteil der Kügelchen weit weniger. Bei normalen, pastösen Füllmassen kann es sogar zur Bildung von Vakuolen, d.h. zu füllmassenfreien Bereichen, innerhalb den Schutzhüllen kommen, die u.U. zu Dämpfungserhöhungen der Lichtwellenleiter und auch zu einem ungünstigeren Auslaufverhalten der Aderfüllmasse AF führen können.

### b.) elastische Vollkügelchen

Die Verwendung elastischer Kügelchen hat den Vorteil, daß sie - anders als starre Kügelchen - bei einer Verlagerung des Lichtwellenleiters diesem nicht als starre Teilchen einen Widerstand entgegensetzen sondern daß sie auch elastisch und ggf. plastisch ausweichen können. Es können somit Teilchen mit größerem Durchmesser dk verwendet werden und ihr volumenmäßiger Anteil an der Füllmasse kann höher gewählt werden als bei starren Vollkügelchen. Bevorzugt können beispielsweise Latexkügelchen verwendet werden, bevorzugt solche aus Polyisopren, welche aus der natürlichen Kautschukemulsion gewonnen werden. Derartige Polyisoprenkügelchen können beträchtliche Mengen Öl aufnehmen, also Öl binden und dadurch noch deutlicher viskoser und elastischer werden. Das Öl ist dabei hinsichtlich seiner schmierenden und eine Bewegung des Lichtwellenleiters LW erleichternden Eigenschaften praktisch weiterhin vorhanden, während hinsichtlich der Tropffestigkeit das Öl in gewissem Umfang an die Kügelchen gebunden ist und so wesentlich günstigere Werte ergibt.

### c.) Elastische und damit kompressible Hohlkügelchen

Hohlkügelchen mit dünner Wandung aus elastischem Material haben neben ihrer hohen Elastizität zusätzlich den Vorteil, daß sie ein besonders geringes spezifisches Gewicht aufweisen und so das spezifische Gewicht der Aderfüllmasse senken. Im Hinblick auf die notwendigen Fördervorgänge während des Fertigungsprozesses ist es zweckmäßig, elastische und kompresible Hohlkügelchen vorzusehen, um möglichst keine Kügelchen beim Füllvorgang der Lichtwellenleiterader LWA zu zerstören. Zerbrochene Kügelchen hätten entsprechend rauhe Oberflächen und würden einer mechanischen Verschiebung des Lichtwellenleiters innerhalb der Aderfüllmasse AF u.U. einen größeren Widerstand entgegensetzen. Hohlkügelchen haben zudem den Vorteil, daß sie eine geringere Wärmleitfähigkeit aufweisen, was im Hinblick auf die termische Beanspruchung (z.B. durch Extrusionsvorgänge) der Aderfüllmasse von Bedeutung sein kann. Hohlkügelchen haben eine um Größenordnungen geringere Dichte als die eigentliche Füllmasse FM (d.h. ohne Kügelchen) und ermöglichen somit eine deutliche Verringerung des spezifischen Gewichtes der Aderfüllmasse AF und verringern somit die Neigung der Aderfüllmasse, unter ihrem eigenen Gewicht aus der Schutzhülle SH auszulaufen.

Mit Gas gefüllte Hohlkügelchen haben gegenüber elastischen Vollkügelchen gewöhnlich noch eine bedeutend höhere Elastizität und vor allen Dingen sind sie auch weitgehend kompressibel. Durch diese Eigenschaften setzen sie den Lichtwellenleiter LW bei einer räumlichen Verlagerung deutlich geringere Kräfte entgegen als etwa elastische Vollkügelchen oder starre Vollkügelchen. Es ist somit möglich, Kügelchen mit größeren Durchmesser dk zu verwenden, wenn diese gasgefüllt, hochkompressibel und hochelastisch sind.

Beispielsweise können Durchmesserwerte im Bereich um 50 µm vorgesehen sein. In diesem Fall sind also Volumenprozente möglich, zwischen Kügelchen KG: 5 % bis 95 %, Füllmasse FM: 95 % bis 5 %. Der Volumenanteil der Kügelchen kann in weiten Grenzen gewählt werden und kann die dichtestmögliche Packung von Vollkügelchen deutlich überschreiten. Vielfach kann es schon genügen, wenn die Kügelchen an ihrer Außenoberfläche leicht eingeölt sind, da sie durch ihre leichte Verformbarkeit bei einer Bewegung des Lichtwellenleiters LW leicht aneinander vorbeigleiten und auch den Lichtwellenleiter leicht an sich vorbeigleiten lassen, wobei große Kräfte nicht auftreten, da sowohl das Gleiten als solches erleichtert ist, als auch durch die leichte Verformbarkeit der Kügelchen noch unterstützt wird. Ein weiterer Vorteil der Verwendung von Hohlkügelchen besteht darin, daß diese beim Fördervorgang, d.h. beim Füllen der Schutzhülle SH durch den Förderdruck komprimiert werden, wodurch in diesem Zustand der semiliquide Anteil der Aderfüllmasse erhöht wird und so Mischungen auch mit hohen Volumenanteilen an Kügelchen noch gut gefördert werden können. Die hohe Kompressibilität hat den weiteren Vorteil, daß beim Aufbringen der Schutzhülle SH die Aderfüllmasse AF als ganzes etwas komprimiert wird und die Kügelchen z.B. durch die Extrusionswärme sich noch in ihrem Durchmesser etwas vergrößern, so daß beim Abkühlen mit Sicherheit eine restliche Kompression der Hohlkügelchen verbleibt und so keine Hohlräume (Vakuolen) innerhalb der Aderfüllmasse AF entstehen können. Ein weiterer Vorteil besteht darin, daß in Schutzhüllen die bei Raumtemperatur vollständig gefüllt worden sind, bei höheren Temperaturen der Druck nur wenig ansteigt, weil die Volumenvergrößerung der pastösen Füllmasse FM durch eine Volumenverkleinerung der Hohlkügelchen aufgefangen oder kompensiert wird. Durch die vorgenannten vorteilhaften Eigenschaften der Hohlkügelchen ist die Bildung von Vakuolen im Inneren der Schutzhülle SH vermieden und es kann auch nicht zu diskontinuierlichen Füllungen des Innenraumes kommen, die zu Mikrobending und Anhaften der Lichtwellenleiter an der Wandung und damit zu Dämpfungserhöhungen der Lichtwellenleiter führen könnten.

Da Hohlkügelchen nur geringfügige Festkörperanteile haben und ansonsten aus gasgefüllten Bläschen bestehen, bewirkt ihre Beimischung zu semiliquiden Füllmassen FM eine Herabsetzung der Wärmeleitfähigkeit und der Wärmekapazität der so erhaltenen Aderfüllmassen. Dies hat zur Folge, daß es beim Extrudieren der Schutzhülle SH nicht zu einer starken Abschreckung der Innenwand der röhrchförmigen Schutzhülle SH kommen kann, wie bei der Verwendung nur pastösen Füllmassen FM. Durch die geringe Wärmeleitfähigkeit können auch semiliquide Massen verwendet werden, die sich bei höheren Temperaturbelastungen zersetzen und für sich allein nicht mehr auslaufsicher sind.

### Thixotropierungs- und Verdickungsmittel

Um die nötige Tropfsicherheit zu erreichen, ist bei den üblichen Aderfüllmassen ohne Hohlkügelchen der Einsatz sehr feinteiliger Thixotropierungsmittel notwendig, die aber entsprechend teurer sind. Normalerweise wird hierfür hochdisperses Siliziumdioxid SiO₂ verwendet (z.B. "Aerosil" der Fa. Degussa), während bei Aderfüllmassen mit Hohlkügelchen auch einfachere Thixotropierungsmittel einsetzbar sind. Beispielsweise können solche verwendet werden, die aus plättchenförmigen Teilen bestehen, wie z.B. Bentonite oder Kaolin. Schließlich ist es auch möglich, röhrchenförmige Teilchen wie etwa Halloysit (Aluminiumsilicathydrat) oder auch aus lockeren Kugelpackungen bestehende Zumischungen, wie z.B. Gummigutt, Polyamide, Polysaccaride oder Polystyrol-Isopren-Kautschuk zu verwenden. Schließlich ist als Verdickungsmittel auch hydriertes Rizinusöl einsetzbar.

Eine weiter Möglichkeit hinsichtlich der Verwendung einfacherer Thixotropierungs- und Verdickungsmittel besteht darin, schockgekühlte Massen zu verwenden. Hierbei wird beispielsweise ein niedermolekulares Polymer, z.B. Polyäthylen bei etwa 150° C in Paraffinöl aufgelöst. Die Lösung wird innerhalb von 1 bis 2 Sekunden auf Raumtemperatur abgekühlt. Dabei bilden sich sehr feine PE-Teilchen, die sich zu einem Netz zusammenlagern und eine Gelstruktur ergeben. Der Nachteil derartiger verhältnismäßig billiger Massen ist, daß die Gelstruktur zerstört wird, wenn sie bis in die Nähe des Kristallitschmelzpunktes des Polymers von z.B. 110° C bei PE erwärmt und wieder langsam abgekühlt wird. Die Ursache dafür ist darin zu sehen, daß sich hierbei größere PE-Teilchen bilden. Bringt man eine solche Masse auf Lichtwellenleiter auf und umspritzt sie mit einer Schutzhülle SH so wird zumindest in dem an die Röhrchenwandung angrenzenden Bereichen die Gelstruktur durch die erhöhte Extrusionstemperatur zerstört. Die Zumischung von Kügelchen, insbesondere von Hohlkügelchen ergibt sich der Vorteil, daß dadurch die Wärmeleitfähigkeit der Aderfüllmasse deutlich geringer wird und so die Agglomeration oder Zersetzung der Polymerteilchen gestört bzw. vermieden wird. Auf diese Weise ist es möglich, abtropfsichere und weit billigere Aderfüllmassen herzustellen.

Eine weitere Möglichkeit besteht darin, Hohlkügelchen leicht vernetzenden Massen beizumischen. Dabei können die Kügelchen nur einer Komponente vor oder beiden bei der Mischung beigegeben werden.

Bei einem Versuch wurde eine Mischung auf der Basis einer Füllmasse FM "LA 444" (Hersteller: Fa. Huber) mit 20 Volumenprozent Hohlkügelchen hergestellt. Eine Lichtwellenleiterader mit einem Innendurchmesser von 2 mm hat den Abtropftest bis 80° C bestanden. Bei Temperaturwechseltests im Temperaturbereich von -40° C bis +70° C kam es zu keinem nennenswerten Dämpfungserhöhungen. Im Kabel zeigten die Lichtwellenleiter ein ähnliches Verhalten bei Temperaturen bis -30° C. Auch bei der Füllung von Lichtwellenleiteradern mit 6 mm Innendurchmesser ergaben sich ähnliche Ergebnisse.

Ähnlich gute Ergebnisse lassen sich auf der Basis eines Grundöls der Fa. DEA mit der Bezeichnung REA Marx A/75, wobei 3% Gew% Thixotropierungsmittel ("Aerosil" der Fa. Wacher) und 2,75 Gew% (= 38 Vol%) Hohlkügelchen ("Expancel DE" der Fa. Expancel) verwendet werden.

In Figur 2 ist ein Querschnitt durch ein optisches Kabel OC dargestellt, daß im Inneren ein zugfestes Element CE sowie darauf aufgeseilt eine Reihe von Lichtwellenleiteradern LWA1 bis LWAn aufweist. Jede dieser Lichtwellenleiteradern enthält mindestens einen in eine Aderfüllmasse eingebetteten Lichtwellenleiter, wobei im vorliegenden Beispiel bei der Lichtwellenleiterader LWA1 drei Lichtwellenleiter LW1, LW2 und LW3 vorgesehen sind. In jeder dieser Lichtwellenleiteradern LWA1 bis LWAn ist eine Hohlkügelchen enthaltende Aderfüllmasse AF eingebracht, wobei die äußeren Zwickelräume zusätzlich mit einer Seelenfüllmasse SF gefüllt werden können.

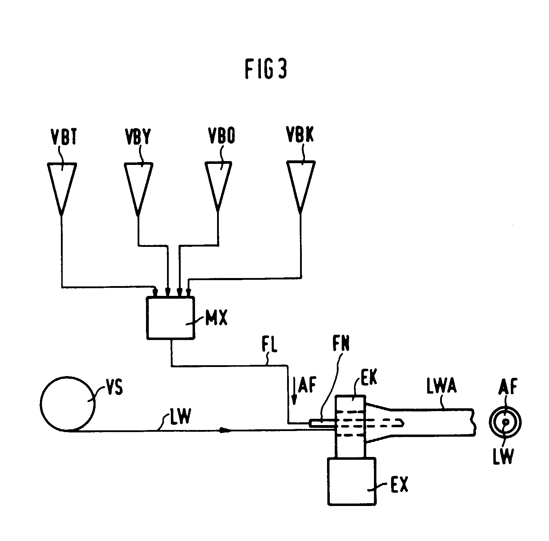

In Figur 3 ist in schematischer Darstellung der Aufbau einer Fertigungslinie zur Herstellung einer Lichtwellenleiterader nach der Erfindung gezeigt. Der Lichtwellenleiter LW wird von einer Vorratsspule VS abgezogen und dem Extruderkopf EK eines Extruders EX zugeführt. Am Ausgang des Extruderkopfes EK wird auf den Lichtwellenleiter die Aderfüllmasse AF aufgebracht und gleichzeitig die Schutzhülle SH aufextrudiert.

Der pastöse Füllmassenanteil FM der Aderfüllmasse AF wird zweckmäßig aus drei Komponenten hergestellt, die aus entsprechenden Vorratsbehältern entnommen werden. So ist in dem Vorratsbehälter VBT ein Thixotropierungsmittel z.B. in Form von feinverteilter Kieselsäure oder dergleichen vorgesehen, während in dem Vorratsbehälter VBV ein organisches Verdickungsmittel vorgesehen ist. In dem dritten Behälter VBO ist eine ölhaltige Flüssigkeit vorgesehen. In dem vierten Behälter VBK sind die für die Zumischung zur pastösen Füllmasse FM vorgesehenen Kügelchen enthalten. Die 3 Grundsubstanzen und die Kügelchen werden in einer nur schematisch angedeuteten Mischeinrichtung MX zusammengeführt und gut durchgemischt. Die Aderfüllmasse AF wird über eine entsprechende Fülleitung FL einer Füllnadel FN zugeleitet, die sich durch den Extruderkopf EK hindurch erstreckt und mindestens bis in den Reckkegel reicht, aus dem die Schutzhülle SH gezogen wird. Die Aderfüllmasse AF wird unter mindestens einem so hohen Druck zugeführt, daß durch die Expansion der elastischen, vorzugsweise hohlen Kügelchen KG mit Sicherheit Vakuolen beim Abkühlen vermieden werden.

Die Zusammenmischung der einzelnen Komponenten der Aderfüllmasse AF kann in unterschiedlicher Weise durchgeführt werden. Besonders zweckmäßig wird dabei so vorgegangen, daß zunächst das Thixotropierungsmittel in einen Mischkessel gegeben wird, und dann etwas Öl (Grundöl) zugefügt wird. In einer so erhaltenen steifen breiigen Masse sind die Scherkräfte so hoch, daß das Thixotropierungsmittel beim Rühren fein dispergiert wird. Später wird weiter langsam Grundöl unter Rühren dazugedüst und am Schluß erst die Hohlkügelchen zugegeben und gut eingemischt.

Es ist schließlich auch möglich, die Aderfüllmasse AF losgelöst von der eigentlichen Aderfertigungslinie in einem eigenen Herstellungsprozeß vorher anzumischen und die Fülleitung FL direkt an einen entsprechenden Vorratsbehälter anzuschließen, der die fertig aufbereitete, also auch die Hohlkügelchen bereits enthaltende Aderfüllmasse enthält.

Vorteilhafterweise werden Kügelchen verwendet, die zunächst noch nicht expandiert sind, z.B. "Expancel DE" der Fa. Expancel Nobel Industries. Diese Kügelchen expandieren bei Wärmezufuhr, sei es beim Mischvorgang oder bevorzugt erst durch die Extrusionstemperatur des Extruderkopfes EK.

Es wurden im Labor Mischungen aus der Füllmasse LA 444 der Fa. Huber und Hohlkügelchen Expancel DE 551 hergestellt. Von der Grundmasse sei hier nur erwähnt, daß sie eine Dichte von 0,9 g/cm³ hat wobei 1 Liter LA 444 etwa 9 DM kostet, Expancel DE 551 besteht aus Hohlkügelchen aus im wesentlichen leicht vernetztem PVDC mit im Mittel 40 µm Durchmesser, wobei die Wanddicke etwa 0,5 µm beträgt (bezogen auf eine Kugel von Fußballgröße ist die Wanddicke also etwa 3mm). Die hochelastischen Kügelchen haben eine wahre Dichte von 0,0415 g/cm³. Das Gewicht eines Kügelchens liegt im Bereich von 10⁻⁹ g. Der Preis ist 40 DM/kg, d.h. 1 Liter wahres Kügelchenvolumen kostet nur 1,66 DM. Anhand dieser Daten wurden 3 verschiedene Mischungen berechnet. Zwei Mischungen wurden hergestellt und ihre Viskosität wurden gemessen.

| Mischung | Kügelchenanteil-(Vol-%) | Zusammensetzung | Dichte (g/cm³) | Viskosität (m Pas) | Preis (DM/l) |
|---|---|---|---|---|---|
| | 0 | LA 444 | 0,9 | 9000 | 9,00 |
| 1 | 20 | 100g/111cm³ | 0,73 | 16000 | 7,54 |
| | | LA 444 | | | |
| | | 1,13g/27cm³ | | | |
| | | Expancel DE | | | |
| 2 | 30 | 100g/111cm³ | 0,64 | 22000 | 6,76 |
| | | LA 444 | | | |
| | | 2g/48cm³ | | | |
| | | Expancel DE | | | |
| 3 | 50 | 100g/111cm³ | 0,47 | | 5,29 |
| | | LA 444 | | | |
| | | 4,6g/111cm³ | | | |
| | | Expancel DE | | | |

## Patentansprüche

1. Lichtwellenleiterader (LWA) mit mindestens einem innerhalb einer Schutzhülle (SH) untergebrachten Lichtwellenleiter (LW) der in eine pastenförmige Füllmasse (FM) eingebettet ist,
**dadurch gekennzeichnet,**
daß zur Bildung einer Aderfüllmasse (AF) in die Füllmasse (FM) Vollkügelchen oder elastische Hohlkügelchen (KG) eingelagert sind, die aus einem anderen Material als die Füllmasse (FM) bestehen und daß der Außendurchmesser der Kügelchen (KG) zur Erreichung einer für Bewegungsvorgänge ausreichenden Verschiebbarkeit des Lichtwellenleiters (LW) bei Vollkügelchen unter 10µm und bei elastischen Hohlkügelchen bis zu 200µm gewählt ist.

2. Lichtwellenleiterader nach Anspruch 2,
**dadurch gekennzeichnet,**
daß der Außendurchmesser der Kügelchen (KG) unter 1 µm gewählt ist.

3. Lichtwellenleiter nach einem der vorhergehenden Ansprüche,
**dadurch gekennzeichnet,**
daß das Verhältnis des Außendurchmessers (dL) des Lichtwellenleiters (LW) zu dem Außendurchmesser (dK) der Kügelchen (KG) bei Vollkügelchen mindestens 25 : 1 und vorzugsweise mindestens 250 : 1 beträgt.

4. Lichtwellenleiterader nach einem der vorhergehenden Ansprüche,
**dadurch gekennzeichnet,**
daß die Oberflächen der Kügelchen (KG) möglichst glatt ausgebildet ist.

5. Lichtwellenleiter nach einem der vorhergehenden Ansprüche,
**dadurch gekennzeichnet,**
daß die Kügelchen (KG) als Vollkügelchen ausgebildet sind.

6. Lichtwellenleiter nach Anspruch 6,
**dadurch gekennzeichnet,**
daß der Volumenanteil der Vollkügelchen zwischen 5 % und 50 % der Aderfüllmasse (AF) gewählt ist.

7. Lichtwellenleiter nach einem der vorhergehenden Ansprüche,
**dadurch gekennzeichnet,**
daß die Kügelchen (KG) elastisch, insbesondere als kompressible Hohlkügelchen ausbebildet sind.

8. Lichtwellenleiter nach Anspruch 8,
**dadurch gekennzeichnet,**
daß der Volumenanteil der elastischen Kügelchen (KG) zwischen 5 % und 95 % der Aderfüllmasse (AF) gewählt ist.

9. Lichtwellenleiter nach einem der vorhergehenden Ansprüche,
**dadurch gekennzeichnet,**
daß die Füllmasse (FM) hinsichtlich ihrer Viskosität so gewählt ist, daß sie unterhalb des für die Tropfsicherheit einer Aderfüllmasse (AF) liegenden Wertes liegt.

10. Lichtwellenleiter nach Anspruch 10,
**dadurch gekennzeichnet,**
daß die Viskosität der Füllmasse (FM) um mindestens den Faktor 0,1 niedriger gewählt ist, als die für die Einhaltung der Tropfsicherheit einer Aderfüllmasse notwendige Viskosität.

11. Lichtwellenleiter nach Anspruch 10 oder 11,
**dadurch gekennzeichnet,**
daß die Viskosität der Füllmasse (FM) unter 1 Pas gewählt ist.

12. Lichtwellenleiter nach einem der vorhergehenden Ansprüche,
**dadurch gekennzeichnet,**
daß die Füllmasse (FM) ein, vorzugsweise gut gleitfähiges, Öl enthält.

13. Lichtwellenleiter nach Anspruch 13,
**dadurch gekennenzeichnet,**
daß das Material der Kügelchen (KG) so gewählt ist, daß dieses oberflächlich Öl bindet.

14. Lichtwellenleiter nach Anspruch 14,
**dadurch gekennenzeichnet,**
die Kügelchen (KG) aus Polyisopren bestehen.

15. Lichtwellenleiter nach einem der vorhergehenden Ansprüche,
**dadurch gekennenzeichnet,**
daß die Füllmasse (FM) ein Thixotropierungsmittel enthält.

16. Lichtwellenleiter nach einem der vorhergehenden Ansprüche,
**dadurch gekennzeichnet,**
daß die Füllmasse (FM) ein Verdickungsmittel enthält.

17. Lichtwellenleiter nach einem der vorhergehenden Ansprüche,
**dadurch gekennzeichnet,**
daß eine Füllmasse (FM) verwendent ist, die ohne Zusatz von Kügelchen (KG) eine derart hohe Wärmeleitfähigkeit aufweist, daß sie bei der Extrusionstemperatur der Schutzhülle (SH) zersetzt wird, und daß der Anteil der Kügelchen in der Aderfüllmasse (AF) so gewählt ist, daß infolge der Verringerung der Wärmeleitfähigkeit der Aderfüllmasse (AF) diese bei der Extrusionstemperatur der Schutzhülle (SH) praktisch nicht mehr zersetzt wird.

18. Verfahren zur Herstellung einer Lichtwellenleiterader nach einem der vorhergehenden Ansprüche, bei dem
eine Schutzhülle (SH) durch Extrusion aufgebracht wird,
und eine Aderfüllmasse (AF) durch den Extruderkopf (EK) des Extruders (EX) hindurch in die Schutzhülle (SH) eingeführt wird,
**dadurch gekennzeichnet,** daß eine Aderfüllmasse (AF) verwendet wird, in die (FM) Vollkügelchen oder elastische Hohlkügelchen (KG) eingelagert sind, die aus einem anderen Material als die Füllmasse (FM) bestehen und daß der Außendurchmesser der Kügelchen (KG) zur Erreichung einer für Bewegungsvorgänge ausreichenden Verschiebbarkeit des Lichtwellenleiters (LW) bei Vollkügelchen unter 10µm und bei elastischen Hohlkügelchen bis zu 200µm gewählt ist.

19. Verfahren nach Anspruch 21,
**dadurch gekennzeichnet,**
daß die Aderfüllmasse (AF) unter Druck zugeführt wird.

20. Verfahren nach Anspruch 20,
**dadurch gekennenzeichnet,**
daß bei Verwendung von elastischen Kügelchen oder Hohlkügelchen diese so stark komprimiert zugeführt werden, daß es bei einer nach der Extrusion der Schutzhülle (SH) stattfindenden Abkühlung zu keiner Bildung von Vakuolen in der Aderfüllmasse kommt.

21. Verfahren nach einem der Ansprüche 19 bis 21,
**dadurch gekennzeichnet,**
daß die Kügelchen (KG) der fertig gemischten Füllmasse (FM) zugeführt und mit dieser vermischt werden.

22. Verfahren nach Anspruch 22,
**dadurch gekennzeichnet,**
daß bei Verwendung einer Füllmasse (FM) mit einem Anteil an Thixotropierungsmittel diesem zunächst Öl zugesetzt und beide Massen vermischt werden, und daß anschließend die Zumischung der Kügelchen (KG) vorgenommen wird.

23. Verfahren nach einem der Ansprüche 19 bis 23,
**dadurch gekennzeichnet,**
daß nicht expandierte Hohlkügelchen in die Aderfüllmasse (AF) eingebracht werden.

24. Verfahren nach Anspruch 24,
**dadurch gekennzeichnet,**
daß die Hohlkügelchen erst durch die Extrusionstemperatur expandiert werden.

## Claims

1. Buffered optical fibre (LWA) having at least one optical fibre (LW) accommodated within a protective jacket (SH) and embedded in a pasty filling material (FM), characterized in that, for forming a buffered-fibre filling material (AF), there are incorporated in the filling material (FM) small solid balls or small flexible hollow balls (KG) which consist of a material which differs from the filling material (FM) and in that, to achieve a displaceability of the optical fibre (LW) which is adequate for movements, the outside diameter of the small balls (KG) is chosen to be less than 10 µm in the case of solid balls and up to 200 µm in the case of flexible hollow balls.

2. Buffered optical fibre according to Claim 1, characterized in that the outside diameter of the small balls (KG) is chosen to be less than 1 µm.

3. Optical fibre according to one of the preceding claims, characterized in that the ratio of the outside diameter (dL) of the optical fibre (LW) to the outside diameter (dK) of the small balls (KG) is at least 25:1, and preferably at least 250:1, in the case of solid balls.

4. Buffered optical fibre according to one of the preceding claims, characterized in that the surfaces of the small balls (KG) are formed to be as smooth as possible.

5. Optical fibre according to one of the preceding claims, characterized in that the small balls (KG) are formed as solid balls.

6. Optical fibre according to Claim 5, characterized in that the proportion by volume of the small solid balls is chosen to be between 5% and 50% of the buffered-fibre filling material (AF).

7. Optical fibre according to one of the preceding claims, characterized in that the small balls (KG) are formed to be flexible, in particular as small compressible hollow balls.

8. Optical fibre according to Claim 7, characterized in that the proportion by volume of the small flexible balls (KG) is chosen to be between 5% and 95% of the buffered-fibre filling material (AF).

9. Optical fibre according to one of the preceding claims, characterized in that the filling material (FM) is chosen with regard to its viscosity such that it lies below the value required for anti-drip properties of a buffered-fibre filling material (AF).

10. Optical fibre according to Claim 9, characterized in that the viscosity of the filling material (FM) is chosen to be lower by at least a factor of 0.1 than the viscosity necessary for maintaining the anti-drip properties of a buffered-fibre filling material.

11. Optical fibre according to Claim 9 or 10, characterized in that the viscosity of the filling material (FM) is chosen to be less than 1 Pas.

12. Optical fibre according to one of the preceding claims, characterized in that the filling material (FM) contains an oil, preferably with good anti-friction properties.

13. Optical fibre according to Claim 12, characterized in that the material of the small balls (KG) is chosen such that it superficially binds oil.

14. Optical fibre according to Claim 13, characterized in that the small balls (KG) consist of polyisoprene.

15. Optical fibre according to one of the preceding claims, characterized in that the filling material (FM) contains a thixotropic agent.

16. Optical fibre according to one of the preceding claims, characterized in that the filling material (FM) contains a thickening agent.

17. Optical fibre according to one of the preceding claims, characterized in that a filling material (FM) is used which, without the addition of small balls (KG), has such a high thermal conductivity that it is decomposed at the extrusion temperature of the protective jacket (SH), and in that the proportion of the small balls in the buffered-fibre filling material (AF) is chosen such that, as a consequence of the reduction in the thermal conductivity of the buffered-fibre filling material (AF), the latter is virtually no longer decomposed at the extrusion temperature of the protective jacket (SH).

18. Method of making a buffered optical fibre according to one of the preceding claims, in which a protective jacket (SH) is applied by extrusion and a buffered-fibre filling material (AF) is introduced into the protective jacket (SH) through the extruder head (EK) of the extruder (EX), characterized in that a buffered-fibre filling material (AF) is used in which there are incorporated small solid balls or small flexible hollow balls (KG) which consist of a material which differs from the filling material (FM) and, to achieve a displaceability of the optical fibre (LW) which is adequate for movements, the outside diameter of the small balls (KG) is chosen to be less than 10 µm in the case of solid balls and up to 200 µm in the case of flexible hollow balls.

19. Method according to Claim 18, characterized in that the buffered-fibre filling material (AF) is supplied under pressure.

20. Method according to Claim 19, characterized in that, if small flexible balls or hollow balls are used, they are supplied in such a highly compressed state that no formation of vacuoles occurs in the buffered-fibre filling material during cooling taking place after the extrusion of the protective jacket (SH).

21. Method according to one of Claims 18 to 20, characterized in that the small balls (KG) are supplied to the ready-mixed filling material (FM) and are mixed with the latter.

22. Method according to Claim 21, characterized in that, if a filling material (FM) with a proportion of thixotropic agent is used, oil is first added to the latter and the two materials are mixed, and in that subsequently the admixing of the small balls (KG) is performed.

23. Method according to one of Claims 18 to 22, characterized in that non-expanded small hollow balls are introduced into the buffered-fibre filling material (AF).

24. Method according to Claim 23, characterized in that the small hollow balls are only expanded when subjected to the extrusion temperature.

## Revendications

1. Fil (LWA) de guides d'ondes lumineuses, comportant au moins un guide (LW) d'ondes lumineuses qui est logé dans une gaine (SH) de protection et qui est enrobé dans une charge (FM) pâteuse, caractérisé par le fait que, pour former une charge (AF) pour fil, il est introduit dans la charge (FM) des petites billes pleines ou des petites billes creuses élastiques (KG), qui sont en un autre matériau que la charge (FM), et par le fait que le diamètre extérieur des petites billes (KG) est choisi, en vue d'obtenir une mobilité du guide (LW) d'ondes lumineuses suffisante pour des opérations de déplacement, inférieur à 10 µm pour des petites billes pleines et jusqu'à 200 µm pour des petites billes creuses élastiques.

2. Fil de guides d'ondes lumineuses suivant la revendication 1, caractérisé en ce que le diamètre extérieur des petites billes (KG) est choisi inférieur à 1 µm.

3. Fil de guides d'ondes lumineuses suivant l'une des revendications précédentes, caractérisé en ce que le rapport du diamètre (dL) extérieur du guide (LW) d'ondes lumineuses au diamètre (dk) extérieur des petites billes (KG) est, pour des petites billes pleines, au moins de 25 : 1 et de préférence au moins de 250 : 1.

4. Fil de guides d'ondes lumineuses suivant l'une des revendications précédentes, caractérisé en ce que les surfaces des petites billes (KG) sont réalisées aussi lisses que possibles.

5. Fil de guides d'ondes lumineuses suivant l'une des revendications précédentes, caractérisé en ce que les petites billes (KG) sont réalisées en petites billes pleines.

6. Fil de guides d'ondes lumineuses suivant la revendication 5, caractérisé en ce que la part en volume des petites billes pleines est choisie entre 5 % et 50% de la charge (AF) pour fil.

7. Fil de guides d'ondes lumineuses suivant l'une des revendications précédentes, caractérisé en ce que les petites billes (KG) sont réalisées de manière élastique, notamment en petites billes creuses compressibles.

8. Fil de guides d'ondes lumineuses suivant la revendication 7, caractérisé en ce que la part en volume des petites billes (KG) élastiques est choisie entre 5% et 95 % de la charge (AF) pour fil.

9. Fil de guides d'ondes lumineuses suivant l'une des revendications précédentes, caractérisé en ce que la viscosité de la charge (FM) est choisie de manière à être inférieure à la valeur correspondant à la sécurité vis-à-vis de l'égouttement d'une charge (AF) pour fil.

10. Fil de guides d'ondes lumineuses suivant la revendication 9, caractérisé en ce que la viscosité de la charge (FM) est choisie au moins 10 fois plus petite que la viscosité nécessaire pour respecter la sécurité vis-à-vis de l'égouttement d'une charge pour fil.

11. Fil de guides d'ondes lumineuses suivant la revendication 9 ou 10, caractérisé en ce que la viscosité de la charge (FM) est choisie inférieure à 1 Pas.

12. Fil de guides d'ondes lumineuses suivant l'une des revendications précédentes, caractérisé en ce que la charge (FM) contient une huile, de préférence ayant une bonne propriété de glissement.

13. Fil de guides d'ondes lumineuses suivant la revendication 12, caractérisé en ce que le matériau des petites billes (KG) est choisi de manière à fixer de l'huile en surface.

14. Fil de guides d'ondes lumineuses suivant la revendication 13, caractérisé en ce que les petites billes (KG) sont en polyisoprène.

15. Fil de guides d'ondes lumineuses suivant l'une des revendications précédentes, caractérisé en ce que la charge (FM) contient un agent de thixotropie.

16. Fil de guides d'ondes lumineuses suivant l'une des revendications précédentes, caractérisé en ce que la charge (FM) contient un agent épaississant.

17. Fil de guides d'ondes lumineuses suivant l'une des revendications précédentes, caractérisé en ce que l'on utilise une charge (FM) qui, sans addition de petites billes (KG), a une conductibilité de la chaleur telle qu'elle est décomposée à la température d'extrusion de la gaine (SH) de protection et en ce que la part des petites billes dans la charge (AF) pour fil est telle que, en raison de la diminution de la conductibilité de la chaleur de la charge (AF) pour fil, cette charge n'est pratiquement plus décomposée à la température d'extrusion de la gaine (SH) de protection.

18. Procédé de fabrication d'un fil de guides d'ondes lumineuses suivant l'une des revendications précédentes, dans lequel on dépose par extrusion une gaine (SH) de protection, on introduit une charge (AF) pour fil dans la gaine (SH) de protection en passant par la tête (EK) de l'extrudeuse (EX), caractérisé en ce que l'on utilise une charge (AF) pour fil dans laquelle il est introduit des petites billes pleines ou des petites billes creuses élastiques (KG), qui sont en un autre matériau que la charge (FM), et en ce que le diamètre extérieur des petites billes (KG) est choisi, en vue d'obtenir une mobilité du guide (LW) d'ondes lumineuses suffisante pour des opérations de déplacement, inférieur à 10 µm pour des petites billes pleines et jusqu'à 200 µm pour des petites billes creuses élastiques.

19. Procédé suivant la revendication 20, caractérisé en ce que l'on envoie la charge (AF) pour fil sous pression.

20. Procédé suivant la revendication 19, caractérisé en ce que, lorsque l'on utilise des petites billes élastiques ou des petites billes pleines, on les envoie en étant si fortement comprimées qu'il ne se forme pas de vacuole dans la charge pour fil lors d'un refroidissement ayant lieu après l'extrusion de la gaine (SH) de protection.

21. Procédé suivant l'une des revendication 18 à 20, caractérisé en ce que l'on envoie les petites billes (KG) à la charge (FM) finie de mélangeage et on les mélange à cette charge.

22. Procédé suivant la revendication 21, caractérisé en ce que, lorsque l'on utilise une charge (FM) comportant une part d'agent de thixotropie, on y ajoute d'abord de l'huile et on mélange les deux compositions, et en ce que l'on procède ensuite à l'addition par mélange des petites billes (KG).

23. Procédé suivant l'une des revendication 19 à 22, caractérisé en ce que l'on introduit des petites billes non dilatées dans la charge (AF) pour fil.

24. Procédé suivant la revendication 23, caractérisé en ce que les petites billes creuses ne sont dilatées que par la température d'extrusion.
